# EUROPÄISCHE PATENTSCHRIFT

(11) **EP 3 780 555 B1**
(45) Veröffentlichungstag und Bekanntmachung des Hinweises auf die Patenterteilung: **29.06.2022**
(21) Anmeldenummer: 20189457.3
(22) Anmeldetag: 04.08.2020
(51) Int. Cl.: H04L 67/12, H04L 67/53, H04L 41/0806

(54) **VERFAHREN ZUR ERST-INBETRIEBNAHME EINES DATENERFASSUNGSGERÄTS**
METHOD FOR THE INITIAL COMMISSIONING OF A DATA ACQUISITION DEVICE
PROCÉDÉ DE MISE EN SERVICE D'UN APPAREIL DE COLLECTE DE DONNÉES

(30) Priorität: 16.08.2019 DE 102019005737
(43) Veröffentlichungstag der Anmeldung: 17.02.2021
(73) Patentinhaber: Diehl Metering Systems GmbH, 90451 Nürnberg (DE)
(72) Erfinder: Schmidt, Achim, 91367 Weißenohe (DE); Fendt, Charles, 90547 Stein (DE)
(74) Vertreter: Diehl Patentabteilung

(56) Entgegenhaltungen:
- US-A1- 2017 006 471
- Unknown: "Technische Richtlinie BSI TR-03109-1, Anlage VI: Betriebsprozesse", , 18. März 2013 (2013-03-18), Seiten 12-28, XP055758798, Gefunden im Internet: URL:https://www.bsi.bund.de/SharedDocs/Dow nloads/DE/BSI/Publikationen/TechnischeRich tlinien/TR03109/TR-03109-1_Anlage_Betriebs prozesse.pdf?__blob=publicationFile&v=1 [gefunden am 2020-12-10]

## Beschreibung

Die vorliegende Erfindung betrifft zum einen ein Verfahren zur Erst-Inbetriebnahme eines Datenerfassungsgeräts gemäß dem Oberbegriff des Anspruchs 1 sowie ein Verfahren zum Betrieb eines Datenerfassungsgeräts gemäß Anspruch 13 und eine Software zur Erst-Inbetriebnahme eines Datenerfassungsgeräts gemäß Anspruch 14.

### Technologischer Hintergrund

Sogenannte Verbrauchszähler sind Bestandteil von Versorgungsnetzen zur Verteilung von Verbrauchsgütern, wie z.B. Gas, Wasser, Wärme oder Elektrizität, und dienen dazu Verbrauchsdaten zu generieren. Verbrauchsdaten werden auf der Basis von von einem Messelement gelieferten Rohmessdaten von einem zählerseitigen Mikroprozessor errechnet und über ein Kommunikationssystem in Form eines BUS-Systems, insbesondere eines sogenannten M-BUS-Systems an eine zentrale Datenverwaltung (Head-End-System) weitergeleitet. Bei den Daten handelt es sich heutzutage vor allem um den aktuellen Verbrauch, d.h. den Zählerstand.

Hierbei werden Rohmessdaten von dem Messelement eines Sensors des Verbrauchszählers zu vorbestimmten Zeitpunkten generiert, von einem Mikroprozessor ausgewertet d. h. in Verbrauchsdaten umgerechnet und die daraus resultierenden Daten anschließend über eine primäre Kommunikationsstrecke von einer Lese- bzw. Empfangseinrichtung (M-BUS-Master bzw. Konzentrator oder Datensammler) zu festgelegten Zeitpunkten an den einzelnen lokal angeordneten Verbrauchszähler abgefragt. Anschließend werden diese aufbereiteten Daten von der Lese- bzw. Empfangseinrichtung über eine tertiäre Kommunikationsstrecke, beispielsweise auf Basis von LAN, GPRS, 3G, LTE, weiter zu einem Head-End-System übertragen. Die Verbrauchsdaten können dann im Head-End angezeigt oder zur Rechnungsstellung verwendet werden. Die bisherige Konzeption der Verbrauchsdatenerfassung ist sowohl in ihrer Informationstiefe als auch in ihrem Informationsumfang begrenzt.

Für eine Inbetriebnahme müssen auf dem Verbrauchszähler für gewöhnlich bereits bei Auslieferung individuelle Schlüssel zur Authentifizierung an einem übergeordneten System vorhanden sein. Hierfür bedarf es bereits bei der Herstellung ein hohes Maß an Sicherheitsvorkehrungen, so dass diese Schlüssel nicht vor Inbetriebnahme der Verbrauchszähler in die Hände von unbefugten Dritten fallen.

### Nächstliegender Stand der Technik

Die US 2017/006471 A1 bezieht sich auf ein Verfahren zur Registrierung eines Heimgeräts eines Heimnetzwerksystems in einem Server, wobei das Verfahren folgende Schritte umfasst: Empfangen eines Zugriffstokens von einem Kontoserver, der ein Konto für ein Steuergerät verwaltet; Empfangen eines Peer-Identifikators (Peer-ID), der das Heimgerät identifiziert, und eine Peer-Gruppen-Kennung (Peer-Gruppen-ID), die eine Gruppe von Heimgeräten identifiziert, von der Steuervorrichtung; und Einloggen in einen Konnektivitätsserver, der die Verbindung zwischen dem Heimgerät und der Steuervorrichtung auf der Basis des Zugangstokens, der Peer-ID und der Peer-Gruppen-ID verwaltet.

In der Technischen Richtlinie BSI TR-03109-1, Anlage VI: Betriebsprozesse, herausgegeben durch das deutsche Bundesamt für Sicherheit in der Informationstechnik werden wesentliche Betriebsprozesse in Verbindung mit dem Smart Meter Gateway (SMGW), die im Energiewirtschaftsgesetz (EnWG) und in auf dessen Grundlage erlassenen Rechtsverordnungen sowie in den Schutzprofilen zum Gateway und zum Sicherheitsmodul angelegt sind. Unter anderem wird der Prozess der Inbetriebnahme des Smart Meter Gateways beschrieben.

In der EP 2 812 838 B1 ist ein Verfahren zur Initialisierung eines Speicherbereichs offenbart, welcher einem Smart-Meter zugeordnet ist. Hierfür ist eine vertrauenswürdige Instanz vorgesehen, wobei zwischen dem Smart-Meter und der vertrauenswürdigen Instanz bereits zum Zeitpunkt der Initialisierung ein Vertrauensverhältnis bestehen muss.

### Aufgabe der vorliegenden Erfindung

Die Aufgabe der vorliegenden Erfindung besteht darin, ein Verfahren zur Erst-Inbetriebnahme eines Datenerfassungsgeräts zur Verfügung zu stellen, bei dem bei geringeren Sicherheitsanforderungen gleichzeitig eine erhöhte Flexibilität bei verringerten Kosten ermöglicht wird.

### Lösung der Aufgabe

Die vorstehende Aufgabe wird durch ein Verfahren mit den Merkmalen des Anspruchs 1 gelöst sowie durch ein Verfahren gemäß Anspruch 13 und eine Software gemäß Anspruch 14. Zweckmäßige Ausgestaltungen des erfindungsgemäßen Verfahrens werden in den Unteransprüchen beansprucht.

Erfindungsgemäß ist ein Verfahren zur Erst-Inbetriebnahme eines Datenerfassungsgeräts, insbesondere eines Datenkonzentrators und/oder eines Sensors bei einem Verbraucher vorgesehen, unter Einbeziehung eines Betreibers, eines Dienstanbieters, eines Head-End-Systems und eines Initialisierungs-Servers, wobei kennzeichnenderweise das Head-End-System dem Betreiber und der Initialisierungs-Server dem Dienstanbieter zugeordnet sind, wobei eine Initialisierungs-App vorgesehen ist, welche vom Betreiber und/oder vom Dienstanbieter für den Verbraucher bereitgestellt wird, wobei folgende Verfahrensschritte ausgeführt werden:
A) der Verbraucher verbindet sich über die Initialisierungs-App mit dem Initialisierungs-Server;
B) der Verbraucher führt mittels der Initialisierungs-App eine lokale Suche nach dem in Betrieb zu nehmenden Datenerfassungsgerät durch;
C) die Initialisierungs-App stellt eine Anfrage an den Initialisierungs-Server zur Registrierung des Datenerfassungsgeräts;
D) der Initialisierungs-Server erstellt einen Registrierungstoken für das Datenerfassungsgerät;
E) der Initialisierungs-Server übergibt den Registrierungstoken an die Initialisierungs-App;
F) die Initialisierungs-App übergibt den Registrierungstoken an das Datenerfassungsgerät;
G) das Datenerfassungsgerät registriert sich durch den Registrierungstoken am Head-End-System.

Somit beansprucht die Erfindung die Inbetriebnahme eines Datenerfassungsgeräts, insbesondere eines Datenkonzentrators und/oder eines Sensors. Der Prozess der Inbetriebnahme teilt sich auf drei Parteien auf. Zum einen gibt es den Verbraucher, bei welchem das Datenerfassungsgerät installiert werden soll. Der Verbraucher kann beispielsweise ein Kunde des Dienstanbieters sein. Der Dienstanbieter kann den Initialisierungs-Server zur Verfügung stellen. Die dritte Partei kann der Betreiber sein, welcher die Verbrauchsdatenerfassungsstruktur betreibt und diese dem Dienstanbieter z. B. als Produkt zur Verfügung stellen kann. Der Dienstanbieter kann somit Kunde des Betreibers sein, wohingegen der Verbraucher wiederum Kunde des Dienstanbieters sein kann. Es ist allerdings kein direkter Kontakt des Verbrauchers zum Betreiber notwendig.

Bei dem Datenerfassungsgerät kann es sich beispielsweise um einen Datenkonzentrator, einen Sensor, einen Verbrauchszähler oder eine vergleichbare Zähleranordnung zur Verbrauchsmessung handeln. Es kann sich beispielsweise um einen Verbrauchszähler für Wasser, Gas, Strom oder Wärme handeln. Auch die Erst-Inbetriebnahme eines Datensammlers ist durch das erfindungsgemäße Verfahren möglich.

Erfindungsgemäß werden folgende weitere Verfahrensschritte ausgeführt:
vor Schritt A):
   A.0) beim Start der Initialisierungs-App durch den Verbraucher authentifiziert sich die Initialisierungs-App am Initialisierungs-Server;
nach Schritt B):
   B.1) nach dem Auffinden des Datenerfassungsgeräts wird dieses zur Registrierung ausgewählt;
   B.2) das Datenerfassungsgerät sendet seinen öffentlichen Schlüssel an die Initialisierungs-App;
anstatt Schritt C):
   C.1) die Initialisierungs-App stellt eine Registrierungsanfrage mit dem öffentlichen Schlüssel des Datenerfassungsgeräts an den Initialisierungs-Server;
nach Schritt D):
   D.1) der Initialisierungs-Server verschlüsselt den erstellten Registrierungstoken mit dem öffentlichen Schlüssel des Datenerfassungsgeräts;
vor Schritt G):
   G.0) das Datenerfassungsgerät entschlüsselt mit seinem privaten Schlüssel den verschlüsselten Registrierungstoken.

Der Registrierungstoken enthält das systemweite Vertrauen (systemweiten Trust). Vorteilhafterweise kann der Registrierungstoken mit dem öffentlichen Schlüssel (Public Key) des Datenerfassungsgeräts verschlüsselt werden. Der Registrierungstoken ist somit vor unbefugtem Zugriff gesichert, da lediglich das Datenerfassungsgerät in der Lage ist mit seinem privaten Schlüssel (Private Key) den verschlüsselten Registrierungstoken zu entschlüsseln.

Die Lösung der Aufgabe verteilt sich somit auf verschiedene Netze. Das Netz des Verbrauchers ist dabei immer involviert. Bei diesem Netz kann es sich um das lokale Netzwerk des Verbrauchers handeln, beispielsweise um das Home Area Network (HAN). Das Netz des Verbrauchers kann dabei beispielsweise über das Internet, einen Cloud-Dienst oder teilweise geöffnete Bereiche lokaler Netzwerke an mindestens ein weiteres Netz angebunden sein. Die Kommunikation zwischen der Initialisierungs-App und dem Initialisierungs-Server kann vorzugweise über das Internet stattfinden. Ferner kann die Kommunikation zwischen dem Datenerfassungsgerät und dem Head-End-System über das Internet stattfinden. Die Kommunikation kann je nach Betrieb der Software über weitere Netze stattfinden. Dies können beispielsweise betriebsinterne Netze sogenannte Corporate Networks, gehostete Lösungen und/oder virtuelle private Netzwerke (VPN) sein.

Dienstanbieter und Betreiber können verschiedene Organisationen sein, mit getrennten Netzen, insbesondere logisch getrennten Netzen. Alternativ können Dienstanbieter und Betreiber identische Organisationen sein.

Nach der Inbetriebnahme stellt der Betreiber die Infrastruktur wie die Verbrauchsdatenerfassungsstruktur und den Service für den operativen Betrieb zur Verfügung. Sofern ein Datensammler oder Gateway zwischen Datenerfassungsgerät und Head-End-System geschaltet ist, überwacht und steuert der Betreiber nach der Installation und Inbetriebnahme den Betrieb des Datensammlers oder Gateways. Dabei empfängt der Betreiber die Rohmessdaten des Datenerfassungsgeräts und bereitet diese für den Dienstanbieter auf.

Vorzugsweise ist der Betreiber nicht vor Ort beim Verbraucher, sondern ist remote erreichbar, beispielsweise über das Internet oder einen Cloud-Dienst. Zusätzlich zum Operativsystem kann der Betreiber für den einzelnen Dienstanbieter eine Infrastruktur zur Inbetriebnahme zur Verfügung stellen.

Der Betreiber kann auch der Hersteller des Datenerfassungsgeräts, insbesondere des Sensors und/oder des Verbrauchszählers und/oder des Datensammlers sein und/oder den Datensammler koordinieren. Alternativ kann es sich bei Betreiber und Hersteller um verschiedene Instanzen handeln.

Der Dienstanbieter kann vorteilhafterweise einen Service bereitstellen, auf Basis der durch den Betreiber verarbeiteten Verbrauchsdaten vom Datenerfassungsgerät, der beim Verbraucher installiert ist. Ein Service kann beispielsweise die Ermittlung von Leckagen und/oder Verbrauchsständen oder das Erkennen von Manipulationen und/oder Fehlern sein. Dieser Service kann beispielsweise für einen Verteilnetzbetreiber, einen Versorger oder einen Verbrauchszählerbetreiber vorgesehen sein.

Ferner kann beispielsweise einer Versicherung vom Dienstanbieter und/oder vom Betreiber versicherungsrelevante Auswertungen der Daten der Verbraucher angeboten werden. Diese Verbraucher können beispielsweise Kunden der Versicherung sein. Anreize könnten beispielsweise Bonusprogramme von Versicherungen sein.

Der Dienstanbieter ist vorzugsweise nicht vor Ort beim Verbraucher, sondern ist remote erreichbar, beispielsweise über das Internet. Der Verbraucher ist vorzugsweise vor Ort am Verbrauchszähler und betreibt ein eigenes lokales Netzwerk.

Der Verbraucher kann vorteilhafterweise den Service des Dienstanbieters nutzen, welcher auf Sensordaten von Datenerfassungsgeräten angewiesen ist, die vor Ort installiert sind. So können die Datenerfassungsgeräte beispielsweise Verbrauchszähler, Wetterstationen, Sensoren für Luftqualität, Schimmelwarner, Sensoren für Bautenschutz wie Detektoren für Wasser-Leckagen oder Alarmanlagen sein.

Die Erfindung hat zum Vorteil, dass sie Confidentiality, Integrity sowie Non-Repudiation der zwischen den Kommunikationspartnern ausgetauschten Nachrichten und Daten erlaubt, obwohl die Anmeldung bzw. Registrierung über eine dritte Partei erfolgt ist.

"Confidentiality" oder zu Deutsch "Vertraulichkeit" bezieht sich auf den Schutz von Informationen vor dem Zugriff durch Unbefugte. Mit anderen Worten, nur die Personen, die dazu berechtigt sind, können Zugriff auf sensible Daten erhalten. Ein Verstoß gegen die Confidentiality bedeutet, dass jemand, der keinen Zugang haben sollte, es geschafft hat, ihn zu erhalten, sei es durch vorsätzliches Verhalten oder durch Zufall. Ein solches Versagen der Confidentiality, allgemein bekannt als Datenpanne oder Datenleck, kann in der Regel nicht behoben werden. Sobald das Geheimnis enthüllt wurde, gibt es keine Möglichkeit mehr, es rückgängig zu machen.

"Integrity" oder zu Deutsch "Integrität" bezieht sich auf die Sicherstellung der Authentizität von Informationen, dass Informationen nicht verändert werden und dass die Quelle der Informationen echt ist.

In der digitalen Sicherheit steht "Non-Repudiation" oder zu Deutsch "Unleugbarkeit" für ein Dienst bzw. Service, der die Integrität und Herkunft von Daten nachweist und/oder eine Authentifizierung, die mit hoher Sicherheit als echt bezeichnet werden kann. Der Nachweis der Datenintegrität kann beispielsweise durch einen Datenhash wie SHA2 sichergestellt werden, so dass die Daten nicht unbemerkt verändert werden können. Selbst mit diesem Schutz ist es möglich, Daten während der Übertragung zu manipulieren, entweder durch einen Man-in-the-Middle-Angriff oder durch Phishing. Aus diesem Grund ist die Datenintegrität am besten zu beurteilen, wenn der Empfänger bereits über die notwendigen Verifizierungsinformationen verfügt. Gängige Verfahren zur Gewährleistung der Non-Repudiation im Zusammenhang mit der digitalen Kommunikation oder Speicherung sind beispielsweise Message Authentication Codes (MAC), die nützlich sind, wenn die kommunizierenden Parteien ein gemeinsames Geheimnis, das sie beide besitzen, verwendet haben. Ein weiteres Verfahren beinhaltet die Verwendung von Digitalen Signaturen, welche die Non-Repudiation auf öffentlich nachprüfbare Weise gewährleistet.

Durch das erfindungsgemäße Verfahren kann die Inbetriebnahme eines Datenerfassungsgeräts von dessen späteren Operativbetrieb entkoppelt werden. Der Verbraucher, welcher z. B. Kunde des Dienstanbieters ist, kann das persönliche Datenerfassungsgerät, z. B. einen Datenkonzentrator, mit einer individualisierten Initialisierungs-App über einen dienstanbieterspezifischen Initialisierungs-Server an einem beliebigen Head-End-Systems eines Betreibers registrieren. Das Head-End-System kann beispielsweise für ein automatisiertes Ablesen von Verbrauchszählern (automatic meter reading - AMR) ausgelegt sein. Das Kundenverhältnis zwischen Verbraucher und Dienstanbieter kann somit beispielsweise von anderen Kundenverhältnissen zwischen Verbraucher und Betreiber oder Betreiber und Dienstanbieter oder zwischen zwei verschiedenen Dienstanbietern entkoppelt werden.

Die Erfindung bietet den weiteren Vorteil, dass ein bestimmter Dienstanbieter ein Datenerfassungsgerät, beispielsweise einen Verbrauchszähler, zusammen mit einer individualisierten Initialisierungs-App an den Verbraucher, der Kunde des Dienstanbieters ist, ausgibt. Vorteilhafterweise können das Datenerfassungsgerät und/oder die Initialisierungs-App mit einem dienstanbieterindividuellen Erscheinungsbild (Look&Feel) ausgebildet sein. Das Erscheinungsbild kann beispielsweise Layout, Logos, Typographie, Hintergrundbilder oder Links zum Kundendienst umfassen. Somit kann das Erscheinungsbild für einen anderen Dienstanbieter entsprechend angepasst werden. Damit kann ein vorhandenes Kundenverhältnis und Kundenerlebnis gewahrt werden. Obwohl die Datenerfassungsgeräte von unterschiedlichen Dienstanbietern mit einem jeweils unterschiedlichen dienstanbieterindividuellen Erscheinungsbild angeboten werden, können diese Datenerfassungsgeräte von ein und demselben Betreiber betrieben werden, so dass eine gemeinsame Infrastruktur im Hintergrund genutzt werden kann.

Zudem bietet die Erfindung den Vorteil, dass der Verbraucher und/oder Anwohner die Installation und Inbetriebnahme des Datenerfassungsgeräts selbst und eigenständig vornehmen kann. Dies hat zur Folge, dass kein Servicemitarbeiter des Betreibers oder des Dienstleisters vor Ort notwendig ist, was den gesamten Prozess der Inbetriebnahme kostengünstiger macht. Weiter profitiert der Verbraucher und/oder Anwohner davon, dass kein Eingriff in seine Privatsphäre durch einen Dritten notwendig ist. Dies wird dem Verbraucher und/oder Anwohner durch Verwendung einer dienstanbieterindividuellen und/oder betreiberindividuellen Initialisierungs-App ermöglicht.

Alternativ oder zusätzlich besteht die Möglichkeit, ein Netzwerk, beispielsweise das Netzwerk des Dienstanbieters in einer Demilitarisierten Zone (DMZ) anzuordnen. Eine DMZ bezeichnet dabei ein Netzwerk, in welchem sicherheitstechnisch kontrollierte Zugriffsmöglichkeiten auf die daran angeschlossenen Server vorgesehen sind.

Bei dem Registrierungstoken kann es sich um einen Software-Token handeln. Ein Software-Token dient zur Zwei-Faktor-Authentifizierungssicherheit, der zur Autorisierung der Nutzung von Computerdiensten verwendet werden kann. Für einen Software-Token gibt es zwei grundsätzliche Sicherheitsarchitekturen: ein gemeinsames Geheimnis (shared secret) oder eine Public-Key-Infrastruktur (PKI).

Es kann eine Public-Key-Infrastruktur (PKI) für die Zertifizierung verwendet werden. PKI bezeichnet ein System, welches digitale Zertifikate ausstellen, verteilen und prüfen kann. Die ausgestellten Zertifikate werden zur Absicherung der rechnergestützten Kommunikation im Netzwerk bzw. in den Netzwerken verwendet. Die Zertifizierung kann von einer Zertifizierungsstelle für digitale Zertifikate (certification authority, CA) durchgeführt werden. Eine CA ist eine Organisation, die digitale Zertifikate herausgibt. Ein digitales Zertifikat kann dazu dienen, einen bestimmten öffentlichen Schlüssel einer Person oder Organisation zuzuordnen.

Diese Zuordnung wird von der CA beglaubigt, indem diese die Zuordnung mit ihrer eigenen digitalen Unterschrift versieht, die der anfragenden Stelle bekannt ist.

Zweckmäßigerweise können folgende Verfahrensschritte vor der Bereitstellung der Initialisierungs-App durchgeführt werden:
A.1) Im Initialisierungs-Server wird vom Betreiber ein Zugangsbereich mit Zugangsdaten für den Verbraucher angelegt;
A.2) der Betreiber übergibt die Zugangsdaten und die Initialisierungs-App an den Dienstanbieter;
A.3) der Dienstanbieter übergibt die Zugangsdaten und die Initialisierungs-App an den Verbraucher;
und wobei folgender Schritt anstatt Schritt A) ausgeführt wird:
A.1) der Verbraucher meldet sich über die Initialisierungs-App mit den erhaltenen Zugangsdaten am Initialisierungs-Server an. Somit kann vor der Bereitstellung der Initialisierungs-App, die Einrichtung eines Zugangsbereichs stattfinden. Es besteht ferner die Möglichkeit für den Dienstanbieter, den Mailverkehr vom Initialisierungs-Server zum Verbraucher zu individualisieren.

Zweckmäßigerweise kann der Initialisierungs-App die Identität des Initialisierungs-Server bekannt sein und die Initialisierungs-App in der Lage sein den Initialisierungs-Server zu authentifizieren.

Vorteilhafterweise kann die Kommunikation zwischen Initialisierungs-App und Initialisierungs-Server und/oder zwischen Datenerfassungsgerät und Head-End-System über eine Internetverbindung stattfinden, beispielsweise über Ethernet oder W-LAN (Wifi).

Vorteilhafterweise kann die Erfindung eine kosteneffiziente Anbindung von entfernt gelegenen Standorten, sogenannten Remote-Locations gewährleisten. Die Übertragung von Sensordaten wie z. B. Verbrauchsdaten findet für gewöhnlich über sogenannte Fixed Networks statt. Fixed Networks sind allerdings abhängig von einer gewissen Dichte von Antennenstandorten. Der Unterhalt dieser Standorte stellt einen signifikanten Anteil an den Netzwerkkosten dar. Das Bestreben geht folglich dahin, möglichst wenige Antennenstandorte aufzubauen und zu betreiben. Die Remote-Locations sind Sensorstandorte, wie beispielsweise Standorte von Datenerfassungsgeräten, die mit einer gewissen Dichte an Antennenstandorten nicht mehr zu empfangen sind. Sollten diese ebenfalls an das Netz angebunden werden, würde dies mit einer signifikanten Kostenerhöhung relativ zu der Anzahl der zusätzlich empfangenen Messstandorten einhergehen. Durch die Verwendung der Internetverbindung des Verbrauchers können diese Mehrkosten für die Anbindung von Remote-Locations vorteilhafterweise umgangen werden.

Für verbrauchsstellenorientierte Services bzw. Dienstleistungen, welche von einer hohen Datengranularität oder Datenaktualität abhängig sind und dem Verbraucher gleichzeitig direkt oder indirekt nutzen, können oftmals nicht angeboten werden, da es an der notwendigen Infrastruktur in Form von Fixed Networks mangelt. Für Anwendungsorte, wo die Installation einer solchen Infrastruktur zu teuer war, kann diese durch die Verwendung einer bestehenden Internetverbindung ersetzt werden. Somit können Datenkonzentratoren über eine Internetverbindung ausgelesen und gesteuert werden.

Zweckmäßigerweise kann der Initialisierungs-Server dem Dienstanbieter logisch und dem Betreiber physisch zugeordnet sein. Der Initialisierungs-Server kann vom Betreiber betrieben werden und sich damit in seiner physischen Zugriffssphäre befinden. Der Dienstanbieter kann beispielsweise auf den Initialisierungs-Server zugreifen, so dass sich der Initialisierungs-Server für den Dienstanbieter in seiner logischen Zugriffssphäre befindet.

Zweckmäßigerweise kann die Initialisierungs-App bei der Registrierungsanfrage an den Initialisierungs-Server die Identität der Initialisierungs-App mitsenden. Somit kann beispielsweise gewährleistet werden, dass die korrekte Individualisierung der Initialisierungs-App für den Verbraucher vorgenommen worden ist. Ferner kann auch die Berechtigung des Verbrauchers geprüft werden. So können beispielsweise Identitäten der Initialisierungs-App, welche z. B. bereits für die Erst-Inbetriebnahme eines anderen Datenerfassungsgeräts verwendet worden sind, ausgeschlossen bzw. blockiert werden, um einen Missbrauch zu vermeiden.

Besonders vorteilhaft ist es, dass ein Lizenzserver mit einbezogen werden kann, wobei der Lizenzserver dem Betreiber oder dem Dienstanbieter zugeordnet ist und wobei folgende Verfahrensschritte ausgeführt werden:
vor Schritt A):
   A.0) im Lizenzserver wird ein Zugangsbereich für den Dienstanbieter angelegt;
nach Schritt C):
   C.1) der Initialisierungs-Server fragt am Lizenzserver um eine Gerätelizenz an;
   C.2) der Initialisierungs-Server erhält eine Gerätelizenz vom Lizenzserver;
anstatt Schritt D):
   D.1) der Initialisierungs-Server erstellt einen Registrierungstoken für das Datenerfassungsgerät, welcher die Gerätelizenz umfasst;
nach Schritt F):
   F.1) das Datenerfassungsgerät wendet die erhaltene Gerätelizenz an;
nach Schritt G):
   G.1) durch die Registrierung des Datenerfassungsgeräts am Head-End-System wird dem Lizenzserver die verbrauchte Gerätelizenz bestätigt.

Die Lizenzierung kann in Abhängigkeit zum Anwendungsfall erfolgen. Das Verfahren erlaubt eine Funktionssteuerung über die vorab erworbene Lizenz, selbst wenn der Verbraucher die Installation und Inbetriebnahme entkoppelt vom Betreiber und/oder Dienstanbieter vornimmt. Ein Datenerfassungsgerät mit generisch verfügbaren Funktionen zum Zeitpunkt der Initialisierung bzw. der Inbetriebnahme kann entsprechend der vorliegenden Lizenz konfiguriert werden, indem das Datenerfassungsgerät beispielsweise spezialisiert oder eingeschränkt wird. Es besteht somit die Möglichkeit, den Funktionsumfang des Datenerfassungsgeräts durch Lizenzen festzulegen, ohne dass die Hardware der Datenerfassungsgeräte angepasst werden muss bzw. ohne dass verschiedene Datenerfassungsgeräte für verschiedene vorgesehene Funktionen notwendig sind.

Vorteilhafterweise kann ein Lizenzmodell zwischen Betreiber und Dienstanbieter und/oder zwischen Dienstanbieter und Verbraucher eingerichtet werden. Beispielsweise ist es möglich, dass Datenerfassungsgeräte die zur Zwei-Wege-Kommunikation fähig sind, als unidirektionale Datenerfassungsgeräte zu einem günstigeren Preis verkauft werden und zu einem späteren Zeitpunkt per Upgrade die Funktionen der bidirektionalen Kommunikation freigeschaltet werden kann. Als weiteres Beispiels kann als Datenerfassungsgerät ein Datensammler für Sensoren und/oder Verbrauchszähler angeführt werden, der vom Betreiber hergestellt wird und in verschiedenen Varianten verkauft werden kann, z. B. mit Support für 30, 150 und 250 Clients (Sensoren). Lösungen für Software-Defined-Radio (SDR) können damit sehr einfach dynamisch individualisiert werden. Besonders vorteilhaft kann dies bei der Verwendung von Bibliotheken Dritter sein, welche lediglich für bestimmte Funktionen der Lösung benötigt werden, aber nicht generell von allen oder den meisten Anwendern benötigt werden. Vorteilhafterweise können die Datenerfassungsgeräte dadurch ohne Produktionsvarianten angeboten werden, was sich positiv auf den Skaleneffekt bei der Produktion auswirkt. Somit können die Kosten bezüglich der jeweiligen Anforderungen optimiert werden.

Damit kann eine einfache Möglichkeit für flexible Lizenzmodelle geschaffen werden. Beispielsweise kann auf dem Lizenzserver des Betreibers ein Kontingent von Lizenzen pro Dienstanbieter verwaltet werden. Da die Lizenz erst mit der Inbetriebnahme konsumiert wird, kann diese sowohl mittels Vorleistung (pre-paid) als auch auf Kommission verkauft werden. Sofern Datensammler verwendet werden, kann der Lizenzserver beispielsweise für jeden Datensammler eine gerätgebundene Lizenz (node-locked Lizenz) vorhalten.

Der Initialsierungs-Server des Dienstanbieters kann beispielsweise entweder eine globale oder eine benutzerindividuelle Initialisierung zulassen. Dementsprechend können vom Dienstanbieter kundenspezifische und/oder dienstspezifische Verträge vergeben werden. Beispielsweise kann ein Verbraucher somit immer eine bestimmte Anzahl von Datenerfassungsgeräten (z. B. Datenkonzentratoren, Sensoren, Verbrauchszähler) für die Dienstleistung (Service) des Dienstanbieters registrieren.

Somit ist vorteilhafterweise eine Möglichkeit zur Entkopplung der Erst-Inbetriebnahme und der Lizenzierung des Datenerfassungsgeräts vom späteren Operativbetrieb geschaffen.

Vorteilhafterweise können folgende Schritte vor der Bereitstellung der Initialisierungs-App durchgeführt werden:
1) Einpflegen der Identität des Verbrauchers im Initialisierungs-Server durch den Dienstanbieter;
2) der Initialisierungs-Server bietet dem Verbraucher einen individuellen Zugang zur Registrierung an;
3) die erfolgreiche Registrierung des Verbrauchers wird dem Dienstanbieter mitgeteilt;
4) der Dienstanbieter stellt dem Verbraucher die individualisierte Initialisierungs-App zur Verfügung.

Durch die oben beschriebenen Verfahrensschritte besteht die Möglichkeit, einen verbraucherindividueller Zugang zu gewähren. Es können somit vorteilhafterweise benutzerindividuelle Initialbenutzerdaten eingepflegt werden und zur Bereitstellung eines individuellen Zugangs zur Registrierung bzw. einer individualisierten Initialisierungs-App verwendet werden.

Besonders vorteilhaft ist es, dass folgende Schritte zur Erstellung eines Benutzerzugangs am Datenerfassungsgerät durchgeführt werden können:
nach Schritt E):
   E.1) bei Übergabe des Registrierungstokens sendet der Initialisierungs-Server ein Ende-zu-Ende verschlüsseltes Steuerkommando an die Initialisierungs-App, welches den angelegten Benutzerzugang enthält;
   E.2) Die Initialisierungs-App übermittelt das Steuerkommando an das Datenerfassungsgerät.

Die oben beschriebenen Verfahrensschritte können das Verfahren vorteilhafterweise um die Erstellung eines Gerätebenutzerzugangs für den Verbraucher erweitern. Hierfür kann bereits im Vorfeld ein verbraucherindividueller Zugang angelegt worden sein. Der Benutzerzugang kann vorteilhafterweise zur Eigennutzung des Verbrauchers verwendet werden. Durch den individuellen Zugang zum Datenerfassungsgerät kann der Verbraucher beispielsweise das übertragene Datenvolumen des Datenerfassungsgeräts einsehen oder Nachrichten vom Dienstanbieter erhalten. Es können zudem operative Statusanzeigen des Datenerfassungsgeräts ausgegeben werden. Damit können Daten, Auswertungen oder Alarme vom Datenerfassungsgerät z. B. vom Datensammler und den daran angeschlossenen Sensoren und/oder Verbrauchszählern ausgelesen werden. Beispielsweise können bei einem Verbrauchszähler die Verbrauchsdaten zur Selbstkontrolle überwacht werden. Der Verbraucher kann somit in die Lage versetzt werden, Energieeinsparungen zu realisieren oder beispielsweise das Datenerfassungsgerät in ein Smart Home System zu integrieren.

Besonders vorteilhaft ist es, dass das Datenerfassungsgerät vor der Erst-Inbetriebnahme generisch ist und keinen Grad der Individualisierung aufweist. Die Verbrauchsdatenerfassungsstruktur kann das Datenerfassungsgerät und das Head-End-System umfassen, so dass die Datenerfassungsgeräte dem Head-End-System des Betreibers zugeordnet sind. Die Datenerfassungsgeräte können somit vor der Auslieferung an den Dienstanbieter generisch sein und keinen Grad der Individualisierung aufweisen, das heißt, dass beispielsweise keine anwenderbezogenen Daten auf dem Datenkonzentrator oder Verbrauchszähler vorhanden sind. Die Anpassung bzw. Individualisierung des Verbrauchszählers findet erst beim Verbraucher statt. Durch die Initialisierungs-App, mit welcher der Verbraucher den Verbrauchszähler registriert, wird der Verbrauchszähler an die Vorgaben des Dienstanbieters für den Verbraucher individualisiert.

Sofern der Betreiber vom Dienstanbieter verschiedene Vorgaben bzw. Anwendungsfälle vorgegeben bekommt oder verschiedene Dienstanbieter mit jeweils unterschiedlichen Vorgaben bzw. Anwendungsfällen bedient, kann dieser in jedem Anwendungsfall einen generischen Verbrauchszähler zur Verfügung stellen, welcher für verschiedene Anwendungsfälle oder verschiedene Dienstanbieter erst beim Verbraucher vor Ort individualisiert werden.

Erst mit Registrierung am Initialisierungs-Server und Übermittlung des Registrierungstoken wird das Datenerfassungsgerät individualisiert und aus seinem generischen Zustand gehoben.

Vorteilhafterweise ist eine variantenminimierte Herstellung des Datenerfassungsgeräts möglich. Das Datenerfassungsgerät kann somit immer auslieferbar sein, beispielsweise vom Betreiber an den Verbraucher. Die Software des Datenerfassungsgeräts kann variantenfrei, aber parametrierbar ausgestaltet sein. Diese Parameter können Layouts, Logos, Klänge, Typographie, Hintergrundbilder sowie Links zum Kundendienst umfassen und können bei der Initialisierung und Inbetriebnahme des Datenerfassungsgeräts von der Initialisierungs-App übergeben werden. Die Übergabe kann beispielsweise durch Übermittlung zwischen Initialisierungs-App und Datenerfassungsgerät über das lokale Netzwerk des Verbrauchers stattfinden. Die Herstellung und Weiterentwicklung des Datenerfassungsgeräts sowie dessen Lagerhaltung und Vertrieb durch den Hersteller kann somit ohne Varianten auskommen. Daraus ergibt sich der Vorteil, dass die Herstellung und Weiterentwicklung weniger komplex aufgebaut sein muss und von Skaleneffekten besser profitieren kann, wodurch das Datenerfassungsgerät zu einem niedrigeren Preis angeboten werden kann.

Ein weiterer Vorteil ist, dass die Herstellung und Weiterentwicklung der Software somit von verschiedenen Varianten losgelöst sein kann, wodurch diese weniger komplex sein kann und kostengünstiger entwickelt werden kann.

Zweckmäßigerweise kann dem Datenerfassungsgerät vor der Erst-Inbetriebnahme eine ID zugeordnet sein. Es besteht die Möglichkeit, dass das Datenerfassungsgerät zum Zeitpunkt des ersten Startes die eigene Identität (ID) auf Basis von IDs von Hardwarekomponenten generiert.

Nebengeordnet wird ein Verfahren zum Betrieb eines Datenerfassungsgeräts beansprucht, welches dadurch gekennzeichnet ist, dass das Datenerfassungsgerät gemäß mindestens einem der vorhergehenden Verfahrensansprüche in Betrieb genommen ist, wobei folgende Verfahrensschritte durchgeführt werden:
nach Schritt G):
H.1) das Datenerfassungsgerät sendet Verbrauchsdaten an das Head-End-System des Betreibers;
H.2) der Betreiber stellt dem Dienstanbieter, auf Grundlage der Verbrauchsdaten, aufbereitete Daten als Service zur Verfügung.

Der Dienstanbieter erhält den Service für ein spezielles Datenerfassungsgerät. Diesen Service für einen speziellen Verbraucher gibt der Dienstanbieter wiederum an den Verbraucher weiter. Der Verbraucher erhält somit einen Service vom Dienstanbieter für den der Verbraucher in seiner Einflusssphäre wiederum ein Datenerfassungsgerät des Betreibers installiert hat. Die Daten, welche der Betreiber erhält lassen keinen Rückschluss auf die Identität des Verbrauchers zu. Somit ist der Verbraucher gegenüber dem Betreiber anonym und die Daten des Verbrauchers anonymisiert. Lediglich der Dienstanbieter kann die Daten bzw. Services dem Verbraucher zuordnen, beispielsweise durch Daten-Mapping. Es kann somit beispielsweise eine Versicherung als Dienstanbieter einem ihrer Kunden als Verbraucher die Detektion eines Wasserlecks anbieten, sofern das Datenerfassungsgerät z. B. als Verbrauchszähler für Wasser ausgestaltet ist. Die Versicherung als Dienstanbieter erfährt dadurch allerdings nicht den realen Wasserverbrauch des Verbrauchers, sondern lediglich die Tatsache, ob ein Wasser-leck vorliegt oder nicht. Der Betreiber des Datenerfassungsgeräts bzw. des Verbrauchszählers kennt z. B. wiederum die Identität des Kunden der Versicherung bzw. des Verbrauchers nicht, sondern erhält lediglich die Rohmessdaten des Datenerfassungsgeräts. Ein Anreiz eines solchen Dienstes durch eine Versicherung kann beispielsweise eine Minderung des Beitrags bei einer Hausratsversicherung für den Kunden sein, da durch solch eine schnelle und frühzeitige Detektion von Wasserlecks ein größerer Schaden vermieden werden kann.

Nebengeordnet wird eine Software zur Erst-Inbetriebnahme eines Datenerfassungsgeräts beansprucht, welche dadurch gekennzeichnet ist, dass die Software gemäß mindestens einem der vorhergehenden Ansprüche in Form einer Initialisierungs-App anwendbar ist.

Die Initialisierungs-App bildet ein Bindeglied zwischen dem Datenerfassungsgerät beim Verbraucher und dem Initialisierungs-Server des Betreibers bzw. des Dienstanbieters. Erst die Initialisierungs-App kann die Einbindung eines generischen, nicht individualisierten Datenerfassungsgeräts in das Datenerfassungsnetzwerkes des Betreibers ermöglichen. Auf dem Datenerfassungsgerät müssen somit vorteilhafterweise bei der Auslieferung, z. B. bei der Auslieferung an den Verbraucher, noch keine individuellen Daten hinterlegt sein, insbesondere keine Schlüssel zur Authentifizierung.

### Beschreibung der Erfindung anhand von Ausführungsbeispielen

Nachstehend wird die vorliegende Erfindung anhand verschiedener Ausführungsbeispiele näher erläutert. Es zeigen:
- Fig. 1: eine stark vereinfachte schematische Darstellung der logischen Verteilung der Netzwerke;
- Fig. 2: eine stark vereinfachte schematische Darstellung der Kommunikations- und Transportinfrastruktur (KTI) innerhalb der Netzwerke;
- Fig. 3: eine stark vereinfachte schematische Darstellung des Ablaufs des erfindungsgemäßen Verfahrens;
- Fig. 4: eine stark vereinfachte schematische Darstellung des Ablaufs des erfindungsgemäßen Verfahrens unter Einbeziehung eines Lizenzservers;
- Fig. 5: eine stark vereinfachte schematische Darstellung des Ablaufs des erfindungsgemäßen Verfahrens mit dem Anlegen eines Zugangsbereichs;
- Fig. 6: eine stark vereinfachte schematische Darstellung des Ablaufs des erfindungsgemäßen Verfahrens mit einem verbraucherindividuellen Zugang;
- Fig. 7: eine stark vereinfachte schematische Darstellung des Ablaufs des erfindungsgemäßen Verfahrens mit einem Benutzerzugang;
- Fig. 8: eine stark vereinfachte schematische Darstellung der Verarbeitung der Daten nach erfolgreicher Erst-Inbetriebnahme von Datenerfassungsgeräten;
- Fig. 9: eine stark vereinfachte schematische Darstellung der Datenströme zwischen Verbraucher, Betreiber und Dienstanbieter.

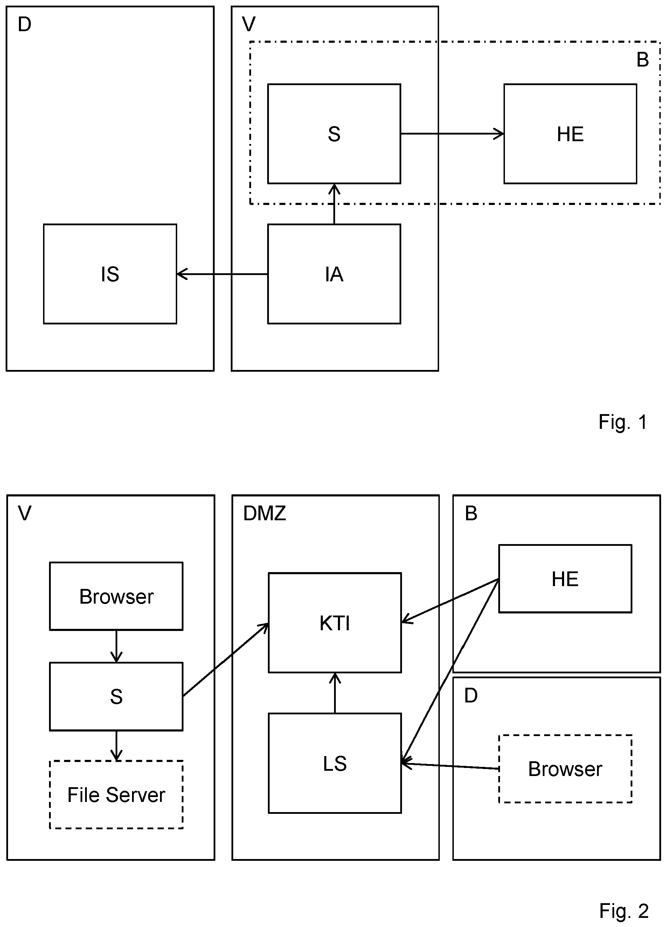

Die Anordnung zur Inbetriebnahme eines Datenerfassungsgeräts (S) bei einem Verbraucher (V) verteilt sich über drei Netzwerke. Fig. 1 zeigt schematisch die logische Verteilung dieser drei Netzwerke, welche das Netzwerk eines Dienstanbieters (D), das Netzwerk des Verbrauchers (V) sowie das Netzwerk eines Betreibers (B) umfasst. Weiter ist der Initialisierungs-Server (IS) dem Netzwerk des Dienstanbieters (D), das Datenerfassungsgerät (S) und eine Initialisierungs-App (IA) dem Netzwerk des Verbrauchers (V), sowie ein Head-End-System dem Netzwerk des Betreibers (B) zugeordnet.

Das Datenerfassungsgerät (S) kann sich logisch sowohl im Netzwerk des Verbrauchers (V) sowie im Netzwerk des Betreibers (B) befinden, obwohl sich das Datenerfassungsgerät (S) physisch nur beim Verbraucher (V) bzw. in dessen Netzwerk befindet. Die Verbindung zwischen den Netzwerken wird über eine Kommunikationsinfrastruktur hergestellt, welche dafür hergerichtet ist, um zwischen einer Mehrzahl voneinander getrennten Netzwerken zu vermitteln.

Wie in Fig. 2 dargestellt, kann es sich beim Netzwerk des Dienstanbieters (D) ferner um eine Demilitarisierte Zone (DMZ) handeln. Innerhalb der DMZ ist eine vermittelnde zentrale Kommunikations- und Transportinfrastruktur (KTI) etabliert, die die Kommunikation der Systemkomponenten ermöglicht. Zudem besteht die Möglichkeit, dass die Kommunikations- oder Transportinfrastruktur eine Public-Key-Infrastruktur (PKI) und/oder eine Zertifizierungsstelle für digitale Zertifikate (CA) umfasst und zur Verfügung stellt, um die Identitäten der Kommunikationsteilnehmer zu verwalten und zu überprüfen.

Das Datenerfassungsgerät (S) umfasst an Hardwarekomponenten eine Spannungsversorgung, eine Tertiärkommunikationsschnittstelle mit Interface zum Netzwerk des Verbrauchers (V), beispielsweise über Ethernet oder W-LAN (Wifi), und eine oder mehrere Primärkommunikationsschnittstellen zur Kommunikation im Nahfeld, beispielsweise WMBus, MBus oder Zigbee. Das Datenerfassungsgerät (S) kann in einer alternativen Ausgestaltung ein Verbrauchszähler oder ein Datensammler sein.

Die Initialisierungs-App (IA) übernimmt eine vermittelnde Rolle zwischen dem Initialisierungs-Server (IS) und dem Datenerfassungsgerät (S). Das Datenerfassungsgerät (S) registriert sich nach einer erfolgreichen Inbetriebnahme durch die Initialisierungs-App (IA) am Head-End-System (HE).

In einer alternativen Ausgestaltung kann der Lizenzserver (LS) innerhalb des Netzwerkes des Dienstanbieters (D) angeordnet sein. Der Lizenzserver (LS) kann sich zudem innerhalb der DMZ befinden.

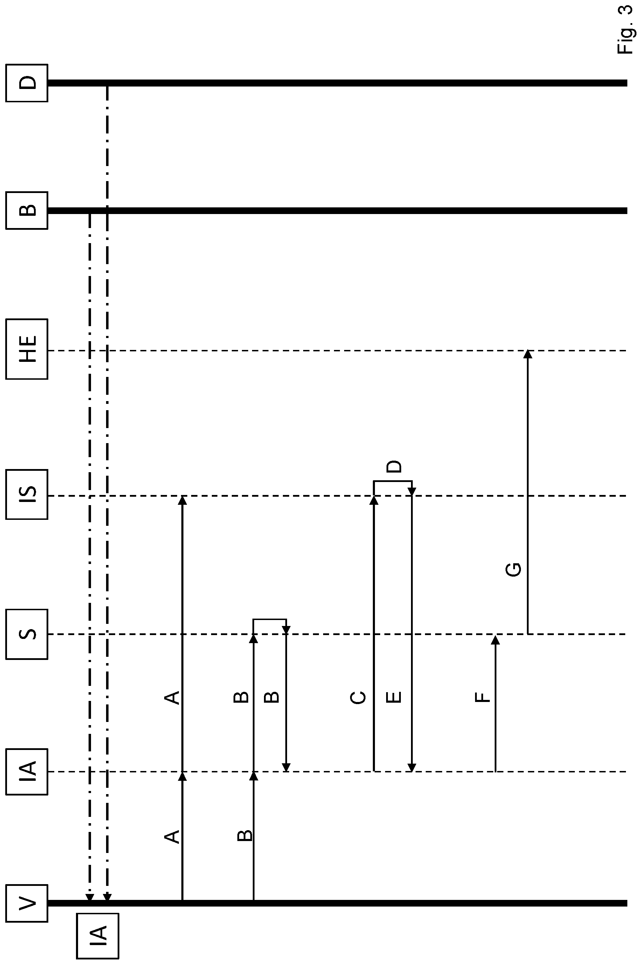

In Fig. 3 ist der Basisprozess zur Erst-Inbetriebnahme eines Datenerfassungsgeräts (S) gezeigt. Als ersten Schritt kann der Betreiber (B) einen spezifischen logischen Bereich im Initialisierungs-Server (IS) für den Dienstanbieter (D) anlegen. Anschließend teilt der Betreiber (B) dem Dienstanbieter (D) hierfür die persönlichen Zugangsdaten mit und übergibt die vorbereitete Initialisierungs-App (IA).

Der Dienstanbieter (D) übergibt die Initialisierungs-App (IA) inklusive der Zugänge zum Initialisierungs-Server (IS) an den Verbraucher (V). Alternativ kann der Betreiber (B) dem Verbraucher (V) die Initialisierungs-App (IA) direkt übergeben. Der Initialisierungs-App (IA) ist die Identität des Initialisierungs-Server (IS) bekannt, wodurch sie in der Lage ist den Initialisierungs-Server (IS) zu authentifizieren.

Anschließend kann der Verbraucher (V) die Initialisierungs-App (IA) starten und sich mit den vom Dienstanbieter (D) oder Betreiber (B) erhaltenen Zugangsdaten anmelden. Es besteht die Möglichkeit, dass der Zugang bereits gegenüber dem Initialisierungs-Server (IS) validiert wird. Als nächsten Schritt führt der Verbraucher (V) eine lokale Netzwerksuche in seinem eigenen Netzwerk durch. Dabei handelt es sich vorzugsweise um sein Home Area Network (HAN). Nach dem Auffinden des Datenerfassungsgeräts (S), welches in Betrieb genommen werden soll, wird dieses zur Registrierung ausgewählt. Das Datenerfassungsgerät (S) sendet hierfür seinen öffentlichen Schlüssel (Public Key) an die Initialisierungs-App (IA).

Die Initialisierungs-App (IA) stellt anschließend eine Registrierungsanfrage an den Initialisierungs-Server (IS). Für die Registrierungsanfrage sendet die Initialisierungs-App (IA) den öffentlichen Schlüssel (Public Key) des Datenerfassungsgeräts (S) und die eigene Identität (ID) an den Initialisierungs-Server (IS).

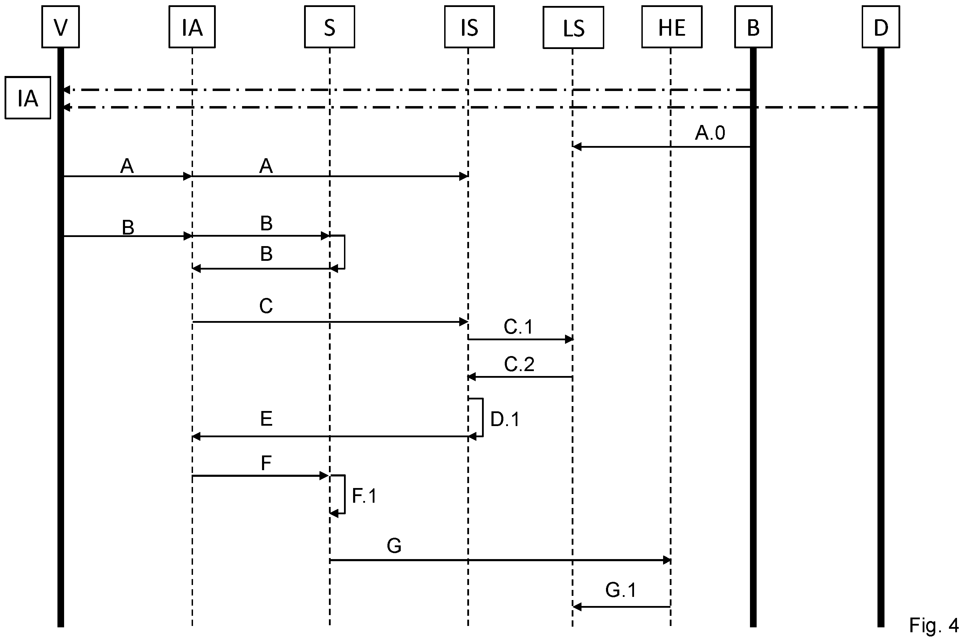

In einer alternativen Ausgestaltung mit einem Lizenzserver (LS), wie in Fig. 4 gezeigt, fragt der Initialisierungs-Server (IS) nach der Registrierungsanfrage der Initialisierungs-App (IA) eine Gerätelizenz am Lizenzserver (LS) an. Sofern der Initialisierungs-Server (IS) vom Lizenzserver (LS) eine Lizenz zur Verfügung gestellt bekommt, erstellt der Initialisierungs-Server (IS) einen Registrierungstoken für das Datenerfassungsgerät (S).

Der Registrierungstoken wird in Fig. 3 in Schritt D) bzw. in Fig.4 in Schritt D.1) erstellt. Dieser Registrierungstoken enthält zudem das systemweite Vertrauen (systemweiter Trust) und ist mit dem öffentlichen Schlüssel (Public Key) des Datenerfassungsgeräts (S) verschlüsselt. Der Registrierungstoken beinhaltet die Registrierungsinformationen, wie Adresse und Benutzerzugangsdaten, für das System des Betreibers (B) und in der Ausgestaltung entsprechend Fig. 4 zusätzlich die Lizenzinformationen. Diese Informationen werden hierfür in einem für die Übertragung von authentifizierten Inhalten geeigneten Container hinterlegt, wie beispielsweise Public-Key Cryptography Standards (PKCS), insbesondere PKCS7 oder beispielsweise XML-Encryption (XMLenc).

Als nächstes wird der Registrierungstoken vom Initialisierungs-Server (IS) an die Initialisierungs-App (IA) übergeben. Die Initialisierungs-App (IA) übergibt diesen personalisierten Registrierungstoken wiederum an das Datenerfassungsgerät (S).

Sofern der Registrierungstoken eine Lizenz beinhaltet, wendet das Datenerfassungsgerät (S) diese Lizenz nach Erhalt des Registrierungstokens an. Damit ist das Datenerfassungsgerät (S) in der Lage, die Funktion zur Registrierung an den übergeordneten Systemen zu nutzen. Diese übergeordneten Systeme können das Head-End-System (HE) umfassen, aber auch übergeordnete Verbrauchszähler oder Datensammler.

Da der Registrierungstoken mit dem öffentlichen Schlüssel (Public Key) des Datenerfassungsgeräts (S) verschlüsselt ist, kann nur dieses Datenerfassungsgerät (S) den personalisierten Registrierungstoken entschlüsseln. Damit ist das Datenerfassungsgerät (S) in der Lage, sich direkt am System des Betreibers (B), insbesondere an der Kommunikations- oder Transportinfrastruktur (KTI) des Betreibers (B) zu registrieren. Das Datenerfassungsgerät (S) bestätigt dem Verbraucher (V) die erfolgte Registrierung über die Initialisierungs-App (IA), indem das Datenerfassungsgerät (S) beispielsweise eine Bestätigungsnachricht an die Initialisierungs-App (IA) sendet. Zudem bestätigt das Datenerfassungsgerät (S) dem Dienstanbieter (D) die erfolgte Registrierung über den Initialisierungs-Server (IS), indem das Datenerfassungsgerät (S) beispielsweise dem Initialisierungs-Server (IS) eine Bestätigungsnachricht sendet. Über die Bestätigung an den Initialisierungs-Server (IS) kann wiederum das Datenerfassungsgerät (S) im Initialisierungs-Server (IS) als lizenziert markiert werden. Dem Lizenzserver (LS) kann die verbrauchte Lizenz bestätigt werden, indem beispielsweise der Initialisierungs-Server (IS) dem Lizenzserver (LS) eine Bestätigungsnachricht sendet.

Anschließend baut das Datenerfassungsgerät (S) eine Verbindung unter Verwendung der registrierten Systemidentität zum Head-End-System (HE) auf. Das Head-End-System (HE) verifiziert diese Anfrage und lässt den Verbindungsaufbau zu. Damit ist Non-Repudiation zwischen dem Datenerfassungsgerät (S) und dem Head-End-System (HE) gewährleistet.

Der Dienstanbieter (D) kann nun das Datenerfassungsgerät (S) dem Verbraucher (V), welcher beispielsweise ein Kunde des Dienstanbieters (D) ist, zuordnen, sowie die Daten, welche das Datenerfassungsgerät (S) an das Head-End-System (HE) sendet. Ferner ist der Dienstanbieter (D) in der Lage die Identitäten des Verbrauchers (V) und des Datenerfassungsgeräts (S) zu bearbeiten oder zu entfernen, beispielsweise über den Initialisierungs-Server (IS).

Das Datenerfassungsgerät (S) ist nun im System des Head-End-System (HE) vertrauenswürdig. Dem Datenerfassungsgerät (S) ist es somit gestattet Daten an das Head-End-System (HE) zu senden bzw. zu pushen. Das Head-End-System (HE) kann anschließend entscheiden, wie die Daten weiter verarbeitet werden. Beispielsweise können ausschließlich vertrauenswürdige Daten von spezifischen Datenerfassungsgeräten (S) an den Dienstanbieter (D) weitergeleitet werden. Es können hierfür beispielsweise im Vorfeld bestimmte Anforderungen festgelegt werden, welche Daten von welchen Datenerfassungsgeräten (S) weitergeleitet werden. Diese Festlegungen können wiederum für verschiedene Dienstanbieter (D) variieren.

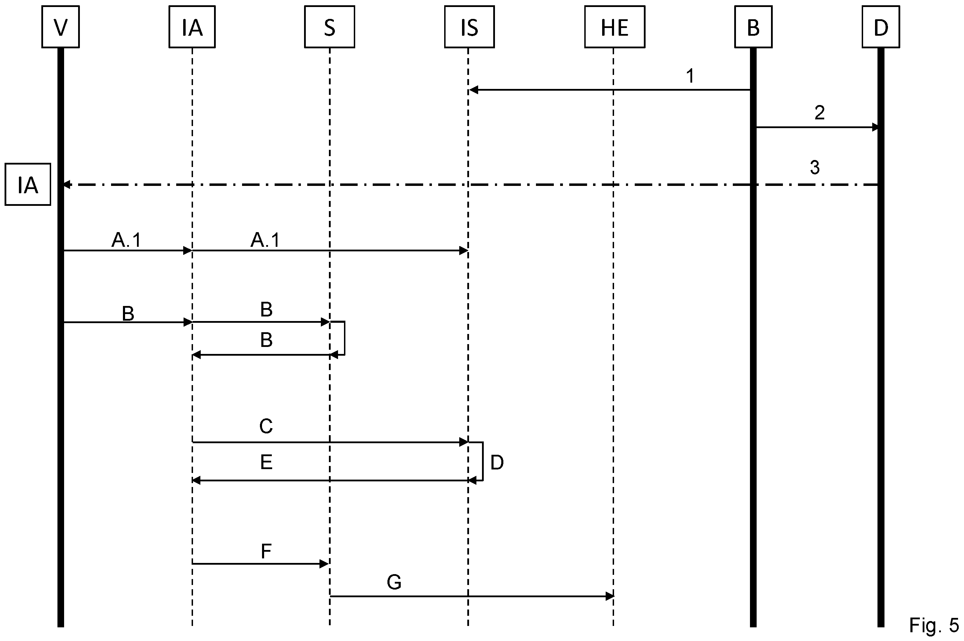

Wie in Fig. 5 gezeigt, kann vor der Bereitstellung der Initialisierungs-App (IA), die Einrichtung eines Zugangsbereichs stattfinden. Hierfür wird vom Betreiber (B) ein Zugangsbereich mit Zugangsdaten für den Verbraucher (V) im Initialisierungs-Server (IS) angelegt. Der Betreiber (B) übergibt in einem zweiten Schritt die Zugangsdaten und die Initialisierungs-App (IA) an den Dienstanbieter (D). Der Dienstanbieter (D) übergibt wiederum die Zugangsdaten und die Initialisierungs-App (IA) an den Verbraucher (V). Der Verbraucher (V) meldet sich anschließend über die Initialisierungs-App (IA) mit den erhaltenen Zugangsdaten am Initialisierungs-Server (IS) an.

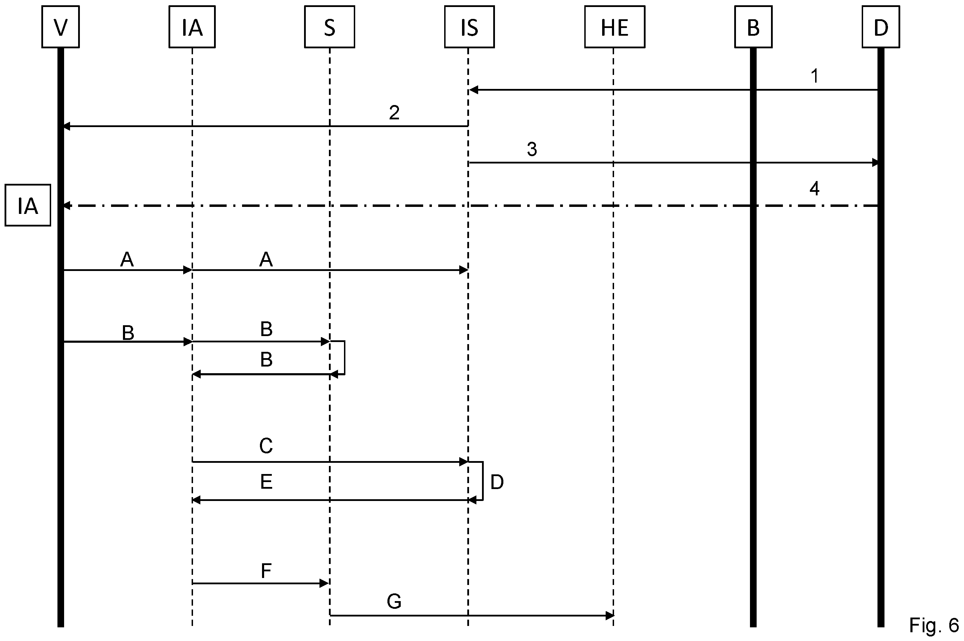

Für den Fall, dass es sich bei dem Verbraucher (V) um einen unbekannten Benutzer bzw. um eine unbekannte Benutzergruppe handelt, kann das erfindungsgemäße Verfahren erweitert werden. Wie in Fig. 6 gezeigt, wird der Basisprozess um benutzerindividuelle Initialbenutzerdaten erweitert. Hierfür wird in einem ersten Schritt vom Dienstanbieter (D) die Identität des Verbrauchers (V) im Initialisierungs-Server (IS) eingepflegt. Dabei wird eine bekannte Identität des Verbrauchers (V), beispielsweise eines Datendienstes wie eine E-Mail-Adresse oder beispielsweise eines Multifaktor-Authentifizierungssystems verwendet. In Fig.6 ist beispielhaft der Austausch per E-Mail modelliert. Der Verbraucher (V) wird somit einschließlich einer bekannten E-Mail-Adresse angelegt. In einem nächsten Schritt bietet der Initialisierungs-Server (IS) dem Verbraucher (V) einen individuellen Zugang an, indem der Initialisierungs-Server (IS) den Verbraucher (V) beispielsweise über die hinterlegte E-Mail-Adresse kontaktiert. Optional kann dieser individuelle Zugang mit einem Einmalpasswort (one-time password, OTP) oder mit einer Multifaktor-Authentifizierung erfolgen. Über diesen individuellen Zugang ist der Verbraucher (V) in der Lage seine Zugangsdaten selbst zu wählen bzw. selbst zu ändern. Die erfolgreiche Registrierung des Verbrauchers (V) am Initialisierungs-Server (IS) wird dem Dienstanbieter (D) mitgeteilt. Im Anschluss wird dem Verbraucher (V) die nun individualisierte Initialisierungs-App (IA) vom Dienstanbieter (D) angeboten. Dies kann beispielsweise automatisiert durch Versand per E-Mail erfolgen.

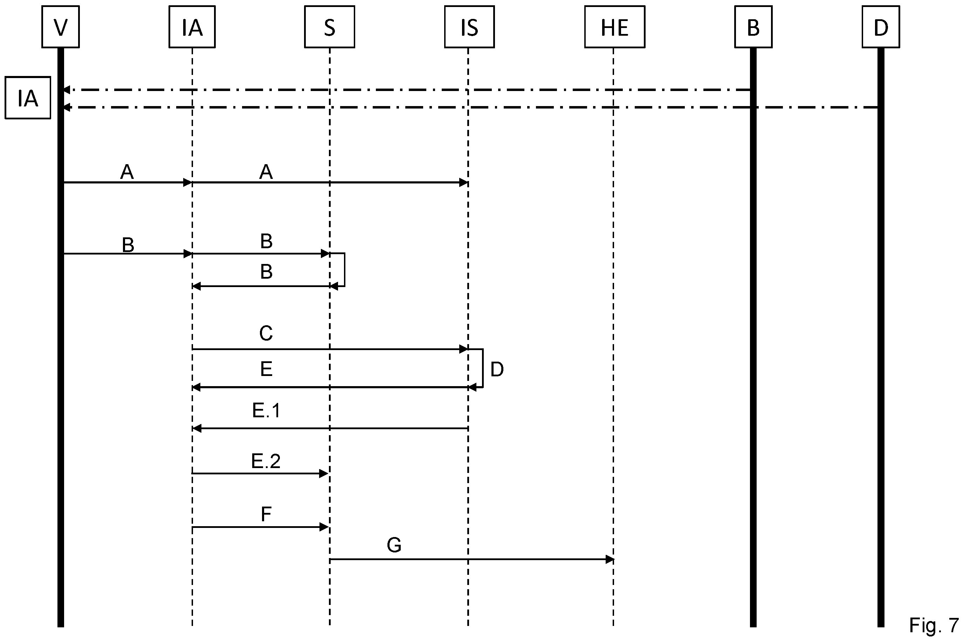

Um einen Gerätebenutzerzugang für den Verbraucher (V) zu erstellen, kann das erfindungsgemäße Verfahren, wie in Fig. 7 gezeigt, erweitert werden. Durch den Gerätenutzerzugang hat der Verbraucher (V) Zugang zum Datenerfassungsgerät (S) und ist damit in der Lage den Status des Datenerfassungsgeräts (S) einzusehen, wie beispielsweise den ordnungsgemäßen Betrieb und das übertragene Datenvolumen. Hierfür wird bei der Übergabe des Registrierungstokens vom Initialisierungs-Server (IS) an die Initialisierungs-App (IA) zudem ein Ende-zu-Ende verschlüsseltes Steuerkommando vom Initialisierungs-Server (IS) an die Initialisierungs-App (IA) mitgesendet. Dieses Steuerkommando hat das Vertrauen (Trust) vom Initialisierungs-Server (IS) und enthält den angelegten Benutzerzugang für den Verbraucher (V). In einem nächsten Schritt übermittelt die Initialisierungs-App (IA) das Steuerkommando an das Datenerfassungsgerät (S). Das Datenerfassungsgerät (S) kann der Initialisierungs-App (IA) optional eine Bestätigungsnachricht zurück senden.

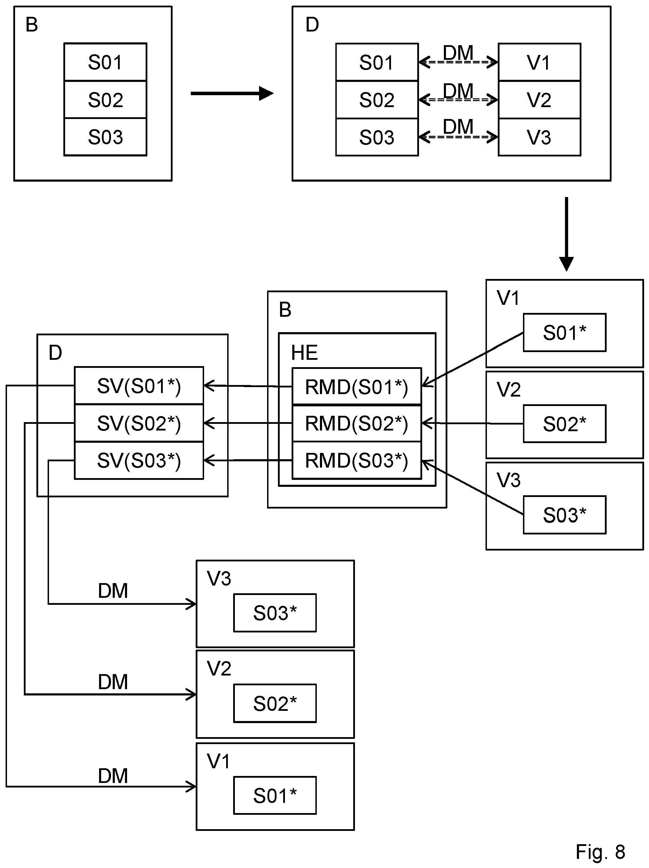

In Fig. 8 ist die Erst-Inbetriebnahme von drei Datenerfassungsgeräten (S01 - S03) gezeigt. Der Betreiber (B) bietet die Datenerfassungsgeräte (S01 - S03) an, welche vor der Erst-Inbetriebnahme generisch sind und keinen Grad der Individualisierung aufweisen. Die Datenerfassungsgeräte (S01 - S03) werden dem Dienstanbieter (D) vom Betreiber (B) übergeben. Der Dienstanbieter (D) gibt die Datenerfassungsgeräte (S01 - S03) an die Verbraucher (V1 - V3) weiter, beispielsweise im Zuge eines Dienstes bzw. Services (SV), welchen der Dienstanbieter (D) anbietet. Vor der Weitergabe an die Verbraucher (V1 - V3) notiert bzw. speichert der Dienstanbieter (D) die Zuordnung der Datenerfassungsgeräte (S01 - S03) zu den Verbrauchern (V1 - V3). Der Dienstanbieter (D) ist somit in der Lage ein Daten-Mapping (DM) zwischen den Daten, wie beispielsweise Verbrauchsdaten und/oder Sensordaten, von den Datenerfassungsgeräten (S01 - S03) und den Benutzerdaten von den Verbrauchern (V1 - V3) durchzuführen. Die Verbraucher (V1 - V3) führen bei ihren erhaltenen, generischen und nicht individualisierten Datenerfassungsgeräten (S01 - S03) eine erfindungsgemäße Erst-Inbetriebnahme durch, wodurch die Datenerfassungsgeräte (S01* - S03*) individualisiert werden und nicht länger generisch sind. Nach der Erst-Inbetriebnahme senden die Datenerfassungsgeräte (S01* - S03*) ihre Rohmessdaten (RMD), beispielsweise Verbrauchsdaten (RMD(S01*) - RMD(S03*)) wie in Fig. 8 gezeigt, an das Head-End-System (HE) des Betreibers (B). Der Betreiber (B) kann die erhaltenen Verbrauchsdaten (RMD(S01*) - RMD(S03*)) weiter verarbeiten, beispielsweise entsprechend den gewünschten Diensten bzw. Services (SV) des Dienstanbieters (D). Der Dienstanbieter (D) erhält vom Betreiber (B) die gewünschten Serviceleistungen (SV(S01*) - SV(S03*)). Diese Serviceleistungen (SV(S01*) - SV(S03*)) können beispielsweise bei Datenerfassungsgeräten (S), welche als Verbrauchszähler verwendet werden, die aufbereiteten Verbrauchdaten umfassen, welche z. B. entsprechend der gewünschten Granularität bereitgestellt werden. Ferner können die Serviceleistungen (SV(S01*) - SV(S03*)) auch Dienste wie z. B. eine Leck-Detektion bei Datenerfassungsgeräten (S), welche als Verbrauchszähler für Wasser verwendet werden, umfassen. Die Serviceleistungen (SV(S01*) - SV(S03*)) stellen somit Daten bzw. Datensätze dar, die ausgehend von den Rohmessdaten (RMD) der Datenerfassungsgeräte (S01* - S03*), hier beispielsweise der Verbrauchsdaten (RMD(S01*) - RMD(S03*)), aufbereitet und aufgearbeitet worden sind. Durch Daten-Mapping (DM) kann der Dienstanbieter (D) die Serviceleistungen (SV(S01*) - SV(S03*)) den einzelnen Verbrauchern (V1 - V3) zuordnen. Somit kann der Dienstanbieter (D) den Verbrauchern (V1 - V3) speziell zugeschnittene Serviceleistungen (SV(S01*) - SV(S03*)) anbieten, ohne die Rohmessdaten der einzelnen Datenerfassungsgeräte (S01* - S03*) selbst zu sammeln und auszuwerten. Der Dienstanbieter (D) hat somit keinen Zugriff auf die Rohmessdaten der einzelnen Datenerfassungsgeräte (S01* - S03*), in Fig. 8 beispielsweise als Verbrauchsdaten (RMD(S01*) - RMD(S03*)) dargestellt. Der Betreiber (B), der das Head-End-System (HE) betreibt und die Rohmessdaten (RMD) der Datenerfassungsgeräte (S01* - S03*) erhält, kann wiederum kein Daten-Mapping (DM), also keine Zuordnung der Datensätze der Datenerfassungsgeräte (S01* - S03*) zu den Verbrauchern (V1 - V3) vornehmen. Für den Betreiber (B) sind die Verbraucher (V1 - V3) somit anonym und deren Rohmessdaten (RMD) bzw. Verbrauchsdaten (RMD(S01*) - RMD(S03*)) anonymisiert.

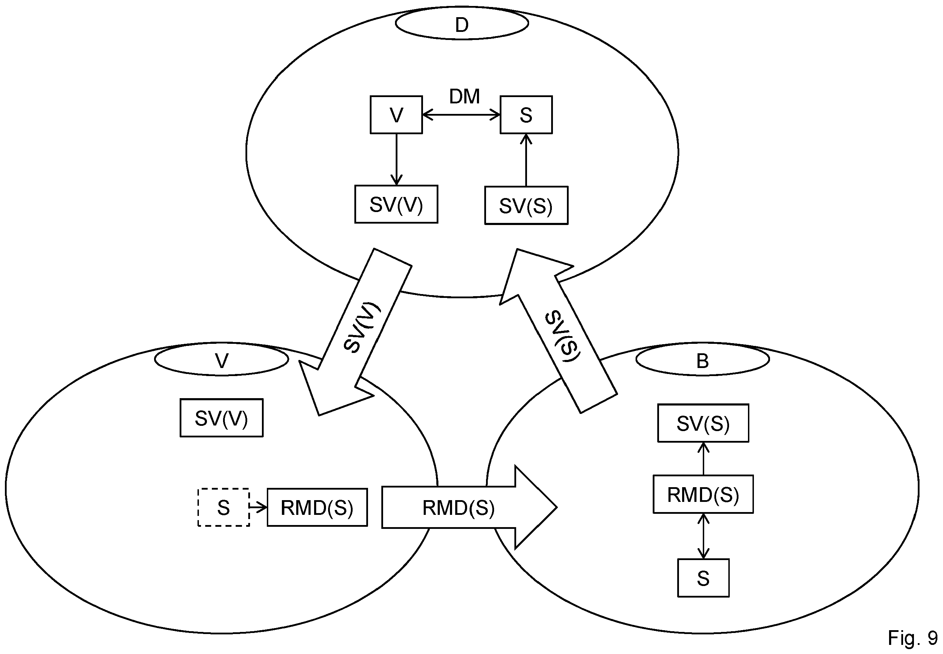

In Fig. 9 ist die Verteilung der verschiedenen Daten zwischen den drei Parteien Verbraucher (V), Dienstanbieter (D) und Betreiber (B) gezeigt. Der Verbraucher (V) betreibt das Datenerfassungsgerät (S), welches Rohmessdaten (RMD) an den Betreiber (B) liefert, beispielsweise an ein Head-End-System (HE).

Der Betreiber (B) stellt das Datenerfassungsgerät (S) zur Verfügung, welche beim Verbraucher (V) zum Einsatz kommen. Vom Datenerfassungsgerät (S) erhält der Betreiber (B) die Rohmessdaten (RMD). Aus diesen Rohmessdaten (RMD) generiert der Betreiber (B) Services (SV). Diese Services (SV) können aufbereitete Daten sein oder lediglich Warnmeldungen, wie beispielsweise eine Warnung vor einem Wasser-Leck. Der Service für ein spezielles Datenerfassungsgerät (SV(S)) wird an den Dienstanbieter (D) übermittelt.

Der Dienstanbieter (D) erhält den Service für ein spezielles Datenerfassungsgerät (SV(S)). Mittels Daten-Mapping (DM) zwischen Datenerfassungsgerät (S) und Verbraucher (V) kann der Dienstanbieter (D) eine Zuordnung des Services für ein spezielles Datenerfassungsgerät (SV(S)) zu einem Service für einen speziellen Verbraucher (SV(V)) durchführen. Diesen Service für einen speziellen Verbraucher (SV(V)) gibt der Dienstanbieter (D) wiederum an den Verbraucher (V) weiter.

Der Verbraucher (V) erhält somit einen Service (SV(V)) vom Dienstanbieter (D) für den der Verbraucher (V) in seiner Einflusssphäre wiederum ein Datenerfassungsgerät (S) des Betreibers (B) installiert hat. Die Daten, welche der Betreiber (B) erhält lassen keinen Rückschluss auf die Identität des Verbrauchers (V) zu. Somit ist der Verbraucher (V) gegenüber dem Betreiber (B) anonym und die Daten des Verbrauchers (V) anonymisiert. Lediglich der Dienstanbieter (D) kann die Daten bzw. Services (SV) dem Verbraucher (V) durch Daten-Mapping (DM) zuordnen.

### BEZUGSZEICHENLISTE

- S: Datenerfassungsgerät
- V: Verbraucher
- B: Betreiber
- D: Dienstanbieter
- HE: Head-End-System
- IS: Initialisierungs-Server
- IA: Initialisierungs-App
- LS: Lizenzserver
- KTI: Kommunikations- und Transportinfrastruktur
- SV: Service
- RMD: Rohmessdaten

## Patentansprüche

1. Verfahren zur Erst-Inbetriebnahme eines Datenerfassungsgeräts (S), eines Datenkonzentrators und/oder eines Sensors, bei einem Verbraucher (V) unter Einbeziehung
eines Betreibers (B),
eines Dienstanbieters (D),
eines Head-End-Systems (HE) und
eines Initialisierungs-Servers (IS),
wobei das Head-End-System (HE) dem Betreiber (B) und der Initialisierungs-Server (IS) dem Dienstanbieter (D) zugeordnet sind, wobei
eine Initialisierungs-App (IA) vorgesehen ist, welche vom Betreiber (B) und/oder vom Dienstanbieter (D) für den Verbraucher (V) bereitgestellt wird, wobei folgende Verfahrensschritte ausgeführt werden:
A.0) beim Start der Initialisierungs-App (IA) durch den Verbraucher (V) authentifiziert sich die Initialisierungs-App (IA) am Initialisierungs-Server (IS);
A) der Verbraucher (V) verbindet sich über die Initialisierungs-App (IA) mit dem Initialisierungs-Server (IS);
B) der Verbraucher (V) führt mittels der Initialisierungs-App (IA) eine lokale Suche nach dem in Betrieb zu nehmenden Datenerfassungsgerät (S) durch;
B.1) nach dem Auffinden des Datenerfassungsgeräts (S) wird dieses zur Registrierung ausgewählt;
B.2) das Datenerfassungsgerät (S) sendet seinen öffentlichen Schlüssel an die Initialisierungs-App (IA);
C.1) die Initialisierungs-App (IA) stellt eine Registrierungsanfrage mit dem öffentlichen Schlüssel des Datenerfassungsgeräts (S) an den Initialisierungs-Server (IS);
D) der Initialisierungs-Server (IS) erstellt einen Registrierungstoken für das Datenerfassungsgerät (S);
D.1) der Initialisierungs-Server (IS) verschlüsselt den erstellten Registrierungstoken mit dem öffentlichen Schlüssel des Datenerfassungsgeräts (S);
E) der Initialisierungs-Server (IS) übergibt den Registrierungstoken an die Initialisierungs-App (IA);
F) die Initialisierungs-App (IA) übergibt den Registrierungstoken an das Datenerfassungsgerät (S);
G.0) das Datenerfassungsgerät (S) entschlüsselt mit seinem privaten Schlüssel den verschlüsselten Registrierungstoken;
G) das Datenerfassungsgerät (S) registriert sich durch den Registrierungstoken am Head-End-System (HE).

2. Verfahren nach Anspruch 1, **dadurch gekennzeichnet, dass** folgende Verfahrensschritte vor der Bereitstellung der Initialisierungs-App (IA) durchgeführt werden:
1) Im Initialisierungs-Server (IS) wird vom Betreiber (B) ein Zugangsbereich mit Zugangsdaten für den Verbraucher (V) angelegt;
2) der Betreiber (B) übergibt die Zugangsdaten und die Initialisierungs-App (IA) an den Dienstanbieter (D);
3) der Dienstanbieter (D) übergibt die Zugangsdaten und die Initialisierungs-App (IA) an den Verbraucher (V);
und wobei folgender Schritt anstatt Schritt A) ausgeführt wird:
A.1) der Verbraucher (V) meldet sich über die Initialisierungs-App (IA) mit den erhaltenen Zugangsdaten am Initialisierungs-Server (IS) an.

3. Verfahren nach mindestens einem der vorhergehenden Ansprüche, **dadurch gekennzeichnet, dass** der Initialisierungs-App (IA) die Identität des Initialisierungs-Server (IS) bekannt ist und die Initialisierungs-App (IA) in der Lage ist den Initialisierungs-Server (IS) zu authentifizieren.

4. Verfahren nach mindestens einem der vorhergehenden Ansprüche, **dadurch gekennzeichnet, dass** die Kommunikation zwischen Initialisierungs-App (IA) und Initialisierungs-Server (IS) und/oder zwischen Datenerfassungsgerät (S) und Head-End-System (HE) über eine Internetverbindung stattfindet.

5. Verfahren nach mindestens einem der vorhergehenden Ansprüche, **dadurch gekennzeichnet, dass** das Datenerfassungsgerät (S) ein Verbrauchszähler oder Datensammler ist.

6. Verfahren nach mindestens einem der vorhergehenden Ansprüche, **dadurch gekennzeichnet, dass** der Initialisierungs-Server (IS) dem Dienstanbieter (D) logisch und dem Betreiber (B) physisch zugeordnet.

7. Verfahren nach mindestens einem der vorhergehenden Ansprüche, **dadurch gekennzeichnet, dass** die Initialisierungs-App (IA) bei der Registrierungsanfrage an den Initialisierungs-Server (IS) die Identität der Initialisierungs-App (IA) mitsendet.

8. Verfahren nach mindestens einem der vorhergehenden Ansprüche, **dadurch gekennzeichnet, dass** ein Lizenzserver (LS) mit einbezogen ist, wobei der Lizenzserver (LS) dem Betreiber (B) oder dem Dienstanbieter (D) zugeordnet ist und wobei folgende Verfahrensschritte ausgeführt werden:
vor Schritt A):
A.0) im Lizenzserver (LS) wird ein Zugangsbereich für den Dienstanbieter (D) angelegt;
nach Schritt C):
C.1) der Initialisierungs-Server (IS) fragt am Lizenzserver (LS) um eine Gerätelizenz an;
C.2) der Initialisierungs-Server (IS) erhält eine Gerätelizenz vom Lizenzserver (LS);
anstatt Schritt D):
D.1) der Initialisierungs-Server (IS) erstellt einen Registrierungstoken für das Datenerfassungsgerät (S), welcher die Gerätelizenz umfasst;
nach Schritt F):
F.1) das Datenerfassungsgerät (S) wendet die erhaltene Gerätelizenz an;
nach Schritt G):
G.1) durch die Registrierung des Datenerfassungsgeräts (S) am Head-End-System (HE) wird dem Lizenzserver (LS) die verbrauchte Gerätelizenz bestätigt.

9. Verfahren nach mindestens einem der vorhergehenden Ansprüche, **dadurch gekennzeichnet, dass** folgende Schritte vor der Bereitstellung der Initialisierungs-App (IA) durchgeführt werden:
1) Einpflegen der Identität des Verbrauchers (V) im Initialisierungs-Server (IS) durch den Dienstanbieter (D);
2) der Initialisierungs-Server (IS) bietet dem Verbraucher (V) einen individuellen Zugang zur Registrierung an;
3) die erfolgreiche Registrierung des Verbrauchers (V) wird dem Dienstanbieter (D) mitgeteilt;
4) der Dienstanbieter (D) stellt dem Verbraucher (V) die individualisierte Initialisierungs-App (IA) zur Verfügung.

10. Verfahren nach mindestens einem der vorhergehenden Ansprüche, **dadurch gekennzeichnet, dass** folgende Schritte zur Erstellung eines Benutzerzugangs am Datenerfassungsgerät (S) durchgeführt werden:
nach Schritt E):
E.1) bei Übergabe des Registrierungstokens sendet der Initialisierungs-Server (IS) ein Ende-zu-Ende verschlüsseltes Steuerkommando an die Initialisierungs-App (IA), welches den angelegten Benutzerzugang enthält;
E.2) Die Initialisierungs-App (IA) übermittelt das Steuerkommando an das Datenerfassungsgerät (S).

11. Verfahren nach mindestens einem der vorhergehenden Ansprüche, **dadurch gekennzeichnet, dass** das Datenerfassungsgerät (S) vor der Erst-Inbetriebnahme generisch ist und keinen Grad der Individualisierung aufweist.

12. Verfahren nach mindestens einem der vorhergehenden Ansprüche, **dadurch gekennzeichnet, dass** dem Datenerfassungsgerät (S) vor der Erst-Inbetriebnahme eine ID zugeordnet ist.

13. Verfahren zum Betrieb eines Datenerfassungsgeräts (S) **dadurch gekennzeichnet, dass** das Datenerfassungsgerät (S) gemäß mindestens einem der vorhergehenden Ansprüche in Betrieb genommen ist, wobei folgende Verfahrensschritte durchgeführt werden:
nach Schritt G):
H.1) das Datenerfassungsgerät (S) sendet Verbrauchsdaten an das Head-End-System (HE) des Betreibers (B);
H.2) der Betreiber (B) stellt dem Dienstanbieter (D), auf Grundlage der Verbrauchsdaten, aufbereitete Daten als Service zur Verfügung.

14. Software zur Erst-Inbetriebnahme eines Datenerfassungsgeräts, dazu ausgebildet, dass die Software von einer Initialisierungs-App (IA) angewandt wird, wobei die Initialisierungs-App (IA) dazu befähigt ist, alle Verfahrensschritte, welche gemäß einem der vorhergehenden Ansprüche von der Initialisierungs-App (IA) getätigt werden, auszuführen.

## Claims

1. Method for the initial commissioning of a data acquisition device (S), a data concentrator and/or a sensor for a consumer (V) with the inclusion of
an operator (B),
a service provider (D),
a head-end system (HE) and
an initialization server (IS),
wherein the head-end system (HE) is assigned to the operator (B) and the initialization server (IS) is assigned to the service provider (D), wherein
an initialization app (IA) is provided and is made available to the consumer (V) by the operator (B) and/or the service provider (D), wherein the following method steps are carried out:
A.0) when the initialization app (IA) is started by the consumer (V), the initialization app (IA) is authenticated on the initialization server (IS);
A) the consumer (V) connects to the initialization server (IS) via the initialization app (IA);
B) the consumer (V) uses the initialization app (IA) to carry out a local search for the data acquisition device (S) to be commissioned;
B.1) after the data acquisition device (S) has been found, it is selected for registration;
B.2) the data acquisition device (S) transmits its public key to the initialization app (IA);
C.1) the initialization app (IA) sends a registration request containing the public key of the data acquisition device (S) to the initialization server (IS) ;
D) the initialization server (IS) creates a registration token for the data acquisition device (S);
D.1) the initialization server (IS) encrypts the created registration token using the public key of the data acquisition device (S);
E) the initialization server (IS) transfers the registration token to the initialization app (IA);
F) the initialization app (IA) transfers the registration token to the data acquisition device (S);
G.0) the data acquisition device (S) decrypts the encrypted registration token using its private key;
G) the data acquisition device (S) registers with the head-end system (HE) by means of the registration token.

2. Method according to Claim 1, **characterized in that** the following steps are carried out before the initialization app (IA) is provided:
1) an access area containing access data is created for the consumer (V) in the initialization server (IS) by the operator (B);
2) the operator (B) transfers the access data and the initialization app (IA) to the service provider (D);
3) the service provider (D) transfers the access data and the initialization app (IA) to the consumer (V);
and wherein the following step is carried out instead of step A):
A.1) the consumer (V) logs onto the initialization server (IS) via the initialization app (IA) using the received access data.

3. Method according to at least one of the preceding claims, **characterized in that** the identity of the initialization server (IS) is known to the initialization app (IA) and the initialization app (IA) is able to authenticate the initialization server (IS).

4. Method according to at least one of the preceding claims, **characterized in that** the communication between the initialization app (IA) and the initialization server (IS) and/or between the data acquisition device (S) and the head-end system (HE) takes place via an Internet connection.

5. Method according to at least one of the preceding claims, **characterized in that** the data acquisition device (S) is a consumption meter or a data collector.

6. Method according to at least one of the preceding claims, **characterized in that** the initialization server (IS) is logically assigned to the service provider (D) and is physically assigned to the operator (B).

7. Method according to at least one of the preceding claims, **characterized in that** the initialization app (IA) concomitantly transmits the identity of the initialization app (IA) in the registration request for the initialization server (IS).

8. Method according to at least one of the preceding claims, **characterized in that** a licence server (LS) is also included, wherein the licence server (LS) is assigned to the operator (B) or to the service provider (D), and wherein the following method steps are carried out:
before step A):
A.0) an access area is created for the service provider (D) in the licence server (LS);
after step C):
C.1) the initialization server (IS) requests a device licence from the licence server (LS);
C.2) the initialization server (IS) receives a device licence from the licence server (LS);
instead of step D):
D.1) the initialization server (IS) creates a registration token for the data acquisition device (S), which registration token comprises the device licence;
after step F):
F.1) the data acquisition device (S) uses the received device licence;
after step G):
G.1) as a result of the data acquisition device (S) being registered with the head-end system (HE), the device licence used is confirmed to the licence server (LS) .

9. Method according to at least one of the preceding claims, **characterized in that** the following steps are carried out before the initialization app (IA) is provided:
1) the identity of the consumer (V) is entered in the initialization server (IS) by the service provider (D) ;
2) the initialization server (IS) provides the consumer (V) with individual access for registration;
3) the successful registration of the consumer (V) is communicated to the service provider (D);
4) the service provider (D) provides the consumer (V) with the individualized initialization app (IA).

10. Method according to at least one of the preceding claims, **characterized in that** the following steps are carried out in order to create user access at the data acquisition device (S):
after step E):
E.1) upon transferring the registration token, the initialization server (IS) transmits an end-to-end encrypted control command to the initialization app (IA), which command contains the user access which has been created;
E.2) the initialization app (IA) transmits the control command to the data acquisition device (S).

11. Method according to at least one of the preceding claims, **characterized in that** the data acquisition device (S) is generic and has no degree of individualization before initial commissioning.

12. Method according to at least one of the preceding claims, **characterized in that** an ID is assigned to the data acquisition device (S) before initial commissioning.

13. Method for operating a data acquisition device (S), **characterized in that** the data acquisition device (S) has been commissioned according to at least one of the preceding claims, wherein the following method steps are carried out:
after step G):
H.1) the data acquisition device (S) transmits consumption data to the head-end system (HE) of the operator (B);
H.2) on the basis of the consumption data, the operator (B) provides the service provider (D) with preprocessed data as a service.

14. Software for the initial commissioning of a data acquisition device, designed such that the software is used by an initialization app (IA), wherein the initialization app (IA) is capable of carrying out all method steps which are carried out by the initialization app (IA) according to one of the preceding claims.

## Revendications

1. Procédé de première mise en service d'un appareil de collecte de données (S), d'un concentrateur de données et/ou d'un capteur, chez un consommateur (V) en intégrant
un opérateur (B),
un prestataire de service (D),
un système de tête de ligne (HE), et
un serveur d'initialisation (IS),
le système de tête de ligne (HE) étant associé à l'opérateur (B), et le serveur d'initialisation (IS) étant associé au prestataire de service (D), dans lequel
une appli d'initialisation (IA) est prévue qui est fournie au consommateur (V) par l'opérateur (B) et/ou par le prestataire de service (D),
les étapes de procédé suivantes étant exécutées :
A.0) au démarrage de l'appli d'initialisation (IA) par le consommateur (V), l'appli d'initialisation (IA) s'authentifie auprès du serveur d'initialisation (IS) ;
A) le consommateur (V) se connecte au serveur d'initialisation (IS) par l'intermédiaire de l'appli d'initialisation (IA) ;
B) le consommateur (V) effectue au moyen de l'appli d'initialisation (IA) une recherche locale de l'appareil de collecte de données (S) à mettre en service ;
B.1) une fois l'appareil de collecte de données (S) localisé, celui-ci est sélectionné pour être enregistré ;
B.2) l'appareil de collecte de données (S) envoie sa clé publique à l'appli d'initialisation (IA) ;
C.1) l'appli d'initialisation (IA) adresse au serveur d'initialisation (IS) une demande d'enregistrement avec la clé publique de l'appareil de collecte de données (S) ;
D) le serveur d'initialisation (IS) crée un jeton d'enregistrement pour l'appareil de collecte de données (S) ;
D.1) le serveur d'initialisation (IS) crypte le jeton d'enregistrement créé avec la clé publique de l'appareil de collecte de données (S) ;
E) le serveur d'initialisation (IS) transmet le jeton d'enregistrement à l'appli d'initialisation (IA) ;
F) l'appli d'initialisation (IA) transmet le jeton d'enregistrement à l'appareil de collecte de données (S) ;
G.0) l'appareil de collecte de données (S) décrypte avec sa clé privée le jeton d'enregistrement crypté ;
G) l'appareil de collecte de données (S) s'enregistre auprès du système de tête de ligne (HE) au moyen du jeton d'enregistrement.

2. Procédé selon la revendication 1, **caractérisé en ce que** les étapes de procédé suivantes sont exécutées avant la fourniture de l'appli d'initialisation (IA) :
1) dans le serveur d'initialisation (IS), l'opérateur (B) crée une zone d'accès avec des données d'accès pour le consommateur (V) ;
2) l'opérateur (B) transmet les données d'accès et l'appli d'initialisation (IA) au prestataire de service (D) ;
3) le prestataire de service (D) transmet les données d'accès et l'appli d'initialisation (IA) au consommateur (V) ;
et l'étape suivante étant exécutée au lieu de l'étape A) :
A.1) le consommateur (V) s'identifie auprès du serveur d'initialisation (IS) par l'intermédiaire de l'appli d'initialisation (IA) avec les données d'accès reçues.

3. Procédé selon au moins l'une des revendications précédentes, **caractérisé en ce que** l'appli d'initialisation (IA) connaît l'identité du serveur d'initialisation (IS), et l'appli d'initialisation (IA) est également en mesure d'authentifier le serveur d'initialisation (IS).

4. Procédé selon au moins l'une des revendications précédentes, **caractérisé en ce que** la communication entre l'appli d'initialisation (IA) et le serveur d'initialisation (IS) et/ou entre l'appareil de collecte de données (S) et le système de tête de ligne (HE) a lieu par une liaison internet.

5. Procédé selon au moins l'une des revendications précédentes, **caractérisé en ce que** l'appareil de collecte de données (S) est un compteur de consommation ou un collecteur de données.

6. Procédé selon au moins l'une des revendications précédentes, **caractérisé en ce que** le serveur d'initialisation (IS) est associé logiquement au prestataire de service (D) et physiquement à l'opérateur (B) .

7. Procédé selon au moins l'une des revendications précédentes, **caractérisé en ce que** l'appli d'initialisation (IA), lors de la demande d'enregistrement, envoie également l'identité de l'appli d'initialisation (IA) au serveur d'initialisation (IS).

8. Procédé selon au moins l'une des revendications précédentes, **caractérisé en ce qu'**un serveur de licence (LS) est intégré, le serveur de licence (LS) étant associé à l'opérateur (B) ou au prestataire de service (D), et les étapes de procédé suivantes étant exécutées :
avant l'étape A) :
A.0) une zone d'accès pour le prestataire de service (D) est créée sur le serveur de licence (LS) ;
après l'étape C) :
C.1) le serveur d'initialisation (IS) demande une licence d'appareil au serveur de licence (LS) ;
C.2) le serveur d'initialisation (IS) reçoit une licence d'appareil du serveur de licence (LS) ;
au lieu de l'étape D) :
D.1) le serveur d'initialisation (IS) crée un jeton d'enregistrement pour l'appareil de collecte de données (S) qui comprend la licence d'appareil ;
après l'étape F) :
F.1) l'appareil de collecte de données (S) applique la licence d'appareil reçue ;
après l'étape G) :
G.1) l'enregistrement de l'appareil de collecte de données (S) auprès du système de tête de ligne (HE) confirme la licence d'appareil consommée auprès du serveur de licence (LS).

9. Procédé selon au moins l'une des revendications précédentes, **caractérisé en ce que** les étapes suivantes sont exécutées avant la fourniture de l'appli d'initialisation (IA) :
1) insérer l'identité du consommateur (V) dans l'appli d'initialisation (IS) par le prestataire de service (D) ;
2) le serveur d'initialisation (IS) propose au consommateur (V) un accès personnalisé à l'enregistrement ;
3) l'enregistrement réussi du consommateur (V) est communiqué au prestataire de service (D) ;
4) le prestataire de service (D) met l'appli d'initialisation (IA) personnalisée à la disposition du consommateur (V).

10. Procédé selon au moins l'une des revendications précédentes, **caractérisé en ce que** les étapes suivantes pour la création d'un accès utilisateur sont exécutées sur l'appareil de collecte de données (S) :
après l'étape E) :
E.1) au moment de la transmission du jeton d'enregistrement, le serveur d'initialisation (IS) envoie à l'appli d'initialisation (IA) une commande cryptée de bout en bout qui contient l'accès utilisateur créé ;
E.2) l'appli d'initialisation (IA) transmet la commande à l'appareil de collecte de données (S).

11. Procédé selon au moins l'une des revendications précédentes, **caractérisé en ce que** l'appareil de collecte de données (S) est générique avant la première mise en service et ne présente aucun degré de personnalisation.

12. Procédé selon au moins l'une des revendications précédentes, **caractérisé en ce qu'**une ID est affectée à l'appareil de collecte de données (S) avant la première mise en service.

13. Procédé permettant de faire fonctionner un appareil de collecte de données (S), **caractérisé en ce que** l'appareil de collecte de données (S) est mis en service selon l'une quelconque des revendications précédentes, les étapes de procédé suivantes étant exécutées :
après l'étape G) :
H.1) l'appareil de collecte de données (S) envoie des données de consommation au système de tête de ligne (HE) de l'opérateur (B) ;
H.2) l'opérateur (B) met à la disposition du prestataire de service (D) comme service des données traitées sur la base des données de consommation.

14. Logiciel de première mise en service d'un appareil de collecte de données, réalisé de façon à ce que le logiciel soit appliqué par une appli d'initialisation (IA), l'appli d'initialisation (IA) étant en mesure d'exécuter toutes les étapes de procédé qui sont actionnées par l'appli d'initialisation (IA) selon l'une quelconque des revendications précédentes.
